# EUROPEAN PATENT SPECIFICATION

(11) **EP 3 892 839 B1**
(45) Date of publication and mention of the grant of the patent: **16.07.2025**
(21) Application number: 21167515.2
(22) Date of filing: 08.04.2021
(51) Int. Cl.: F01P 3/20, F01P 7/16, F01P 7/14, F16K 31/12, F02B 63/04

(54) **TWO-WAY VALVE FOR CONTROLLING A TEMPERATURE OF A COOLANT FOR AN INTERNAL COMBUSTION ENGINE**
ZWEIWEGEVENTIL ZUR REGELUNG DER TEMPERATUR EINES KÜHLMITTELS FÜR EINE BRENNKRAFTMASCHINE
VALVE 2-VOIES POUR RÉGULER LA TEMPÉRATURE D'UN FLUIDE DE REFROIDISSEMENT D'UN MOTEUR À COMBUSTION INTERNE

(30) Priority: 09.04.2020 GB 202005285
(43) Date of publication of application: 13.10.2021
(73) Proprietor: Caterpillar Motoren GmbH & Co. KG, 24159 Kiel (DE)
(72) Inventor: LÜTJE, Henning, 24159 Kiel (DE)
(74) Representative: Novagraaf Group

(56) References cited:
- WO-A1-2008/048166
- WO-A1-2015/030724
- US-A- 2 151 082
- US-A- 2 176 331
- US-A- 2 392 723

## Description

### Technical Field

The present invention pertains to a cooling system for controlling a temperature of a coolant for an internal combustion engine, in particular an engine of a ship or a power plant, a method for controlling a temperature of a coolant for an internal combustion engine and an internal combustion engine with such a cooling system.

### Technological Background

Marine propulsion systems are equipped with an engine-driven propulsion system for generating thrust to move a vessel through water. Typically, such propulsion systems are driven by large internal combustion engines.

The temperature of the internal combustion engine is typically regulated by cooling systems during operation. For this purpose, a coolant is circulated through a cooling circuit comprising typically a high temperature cooler and an air charge cooler.

The regulation of cooling circuits for marine propulsion systems usually involves complex valves, in particular motorized three-way valves, e.g. Pleiger valves, in order to regulate the temperature of the coolant and thus the internal combustion engine. However, such motorized three-way valves are expensive and have many moving parts and are thus prone to failures and defects. Another disadvantage is that the valves require a high level of maintenance during operation. For example, a stuffing box needs to be refilled after a certain number of movements and the assembly needs manual lubrication quite often. In addition, the dimension of the motorized three-way valves is typically large and cannot be arranged in a space saving manner. Furthermore, the motorized three-way valves require an extra power source to drive its motor which increases the power consumption. Further, a specific PID-controller is required to regulate the motorized three-way valves for controlling a coolant to a predetermined setpoint temperature.

From WO 2008/048166 A1 an engine cooling system is known having a two-way valve for regulating the coolant distribution via a cooling circuit and/or via a bypass.

Cooling systems for controlling the temperature of a coolant for an internal combustion engine may still be improved.

### Summary of the Invention

Starting from the prior art, it is an objective to provide an improved cooling system for controlling the temperature of a coolant for an internal combustion engine, in particular an engine of a ship or a power plant. Specifically, it is an objective to provide a cooling system requiring less parts, less energy and less maintenance.

This objective is solved by means of a system for controlling a temperature with the features of claim 1. A method for operating a cooling system is provided with the features of claim 9. Further, an internal combustion engine is provided with the features of claim 10 and which is configured to be connected to the cooling system. Preferred embodiments are set forth in the present specification, the Figures as well as the dependent claims.

Accordingly, a cooling system for controlling the temperature of a coolant for an internal combustion engine is provided, comprising a cooling circuit and a bypass fluidly connected to the cooling circuit and bypassing a section of the cooling circuit. A two-way valve is provided to regulate the coolant distribution via the cooling circuit and/or via the bypass.

Further, a method for operating a cooling system comprising a cooling circuit and a bypass is provided. At least one two-way valve is provided to regulate the coolant distribution in the cooling circuit and/or the bypass, wherein in case the two-way valve is closed the coolant flows into the section of the cooling circuit, wherein in case the two-way valve is opened the coolant flows into the bypass, and in case the valve is in an intermediate position the coolant flows into the section of the cooling circuit as well as the bypass.

In case the two-way valve is opened or is in its intermediate position the coolant flows through the bypass from a to be cooled internal combustion engine through a first conduit, the two-way valve, a third conduit, a second conduit junction, a fifth conduit distributing coolant into the device for absorbing heat from an internal combustion engine and/or an air charge cooler and back through the to be cooled internal combustion engine driven by the pump. In case the two-way valve is closed or in its intermediate position the coolant flows into the section of the cooling circuit from the to be cooled internal combustion engine through the first conduit to the two-way valve where the coolant is diverted to be distributed through the conduit junction and the second conduit distributing the coolant into the HT cooler, further through a fourth conduit distributing the coolant from the HT-cooler, the second conduit junction, the fifth conduit distributing the coolant into the device for absorbing heat from an internal combustion engine and/or the air charge cooler and back through the to be cooled internal combustion engine driven by the pump. The two-way valve is a solenoid valve and/or pilot- operated and/or proportionally controlled by a pulse width modulated PWM signal.

Further, an internal combustion engine is provided comprising the cooling system and an Engine Control Module, ECM for controlling a two-way valve, in particular a pilot operated solenoid valve.

### Brief Description of the Drawings

The present disclosure will be more readily appreciated by reference to the following detailed description when being considered in connection with the accompanying drawings in which:
Fig. 1a shows schematically a cooling system according to a first embodiment for controlling a temperature of a coolant for an internal combustion engine where a two-way valve is in a closed position;
Fig. 1b shows schematically the cooling system according to the first embodiment for controlling a temperature of a coolant for an internal combustion engine where a two-way valve is in an intermediate position;
Fig. 1c shows schematically the cooling system according to the first embodiment for controlling a temperature of a coolant for an internal combustion engine where a two-way valve is in an open position;
Fig. 2 shows schematically a cooling system according to a second embodiment for controlling a temperature of a coolant for an internal combustion engine with two two-way valves.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

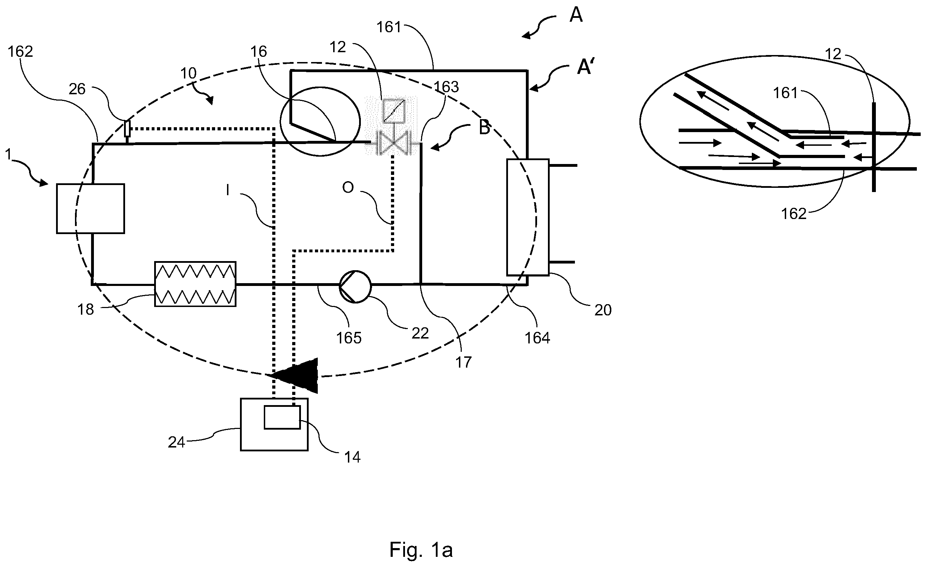

Figure 1a to Figure 1c show schematically a cooling system 10 according to a first embodiment for controlling a temperature of a coolant for an internal combustion engine with only one two-way valve 12.

The cooling system 10 for controlling a temperature of a coolant for an internal combustion engine comprises a cooling circuit A and a bypass B fluidly connected to the cooling circuit A. The bypass B bypasses a section A' of the cooling circuit A. The two-way valve 12 is provided to regulate the coolant distribution via the cooling circuit A and/or via the bypass B.

The flow direction of the cooling circuit is shown in the Figures in a clock-wise manner. If the coolant is guided through the section A' of the cooling circuit A, the flow corresponds to a flow through a main cooling circuit. If the coolant is guided through the bypass, the flow corresponds to a flow through a bypass cooling circuit.

The valve 12 is configured such that if the valve 12 is in a closed position the coolant flows into the section A' of the cooling circuit A (see Figure 1a and the dotted circle indicating the direction of the cooling flow). As shown in Figure 1a the coolant flows in a cooling circuit passing a cooler 20, in particular a high temperature HT-cooler 20 to cool the coolant. The cooling circuit A is configured to guide the coolant from the to be cooled internal combustion engine 1 into the high-temperature HT-cooler 20 and a device for absorbing heat from an internal combustion engine and/or the air charge cooler 18 driven by a pump 22.

Specifically, in case the two-way valve is closed, as shown in Figure 1a, the coolant flows into the section A' of the cooling circuit A from the to be cooled internal combustion engine through the first conduit 162 to the two-way valve 12 where the coolant is diverted (see also the enlarged circle of Figure 1a showing the direction of coolant flow diverted from the closes two-way valve 12) to be distributed through a conduit junction 16 and a second conduit 161 distributing the coolant into the HT cooler, further through a fourth conduit 164 distributing the coolant from the HT-cooler, the second conduit junction 17, the fifth conduit 165 distributing the coolant into the device for absorbing heat from an internal combustion engine and/or the air charge cooler and back through the to be cooled internal combustion engine 1 driven by the pump 22.

The implementation of only one two-way valve in combination with a first conduit junction 16 in a cooling system for an internal combustion engine is advantageous as it enables a regulation of cooling system in an improved and simplified manner, in particular by replacing a (motorized) three-way valve. The two-way valve comprises less parts reducing also the need for maintenance and costs.

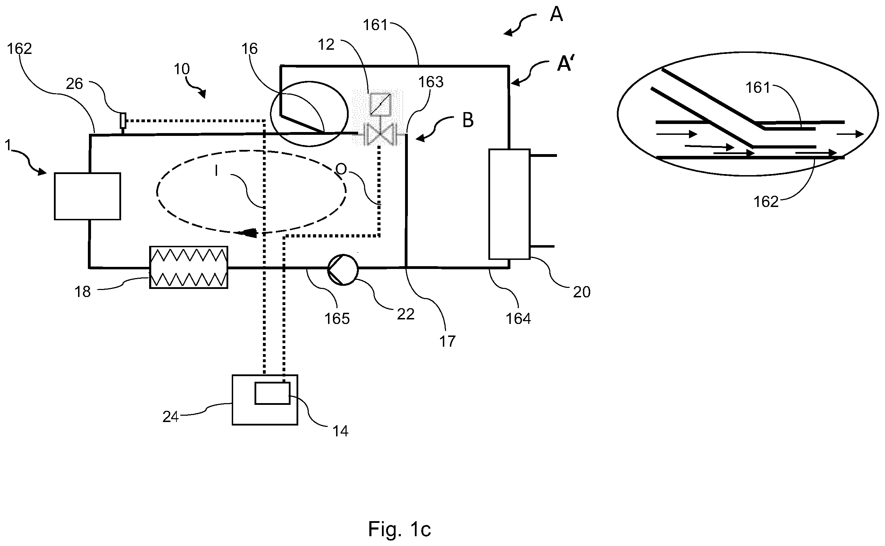

If the valve 12 is in an open position, the coolant flows into the bypass B. The flow of the coolant through section A' of the cooling circuit A, and in particular the flow of the coolant into the HT-cooler 20, is then bypassed (see Figure 1c and the dotted circle indicating the direction of the cooling flow).

Specifically, in case the two-way valve 12 is open, as shown in Figure 1c, the coolant flows through the bypass B from the to be cooled internal combustion engine 1 through a first conduit 162, the two-way valve 12, a third conduit 163, a second conduit junction 17, a fifth conduit 165 distributing coolant into a device for absorbing heat from an internal combustion engine and/or an air charge cooler 18 and back through the to be cooled internal combustion engine driven by the pump 22.

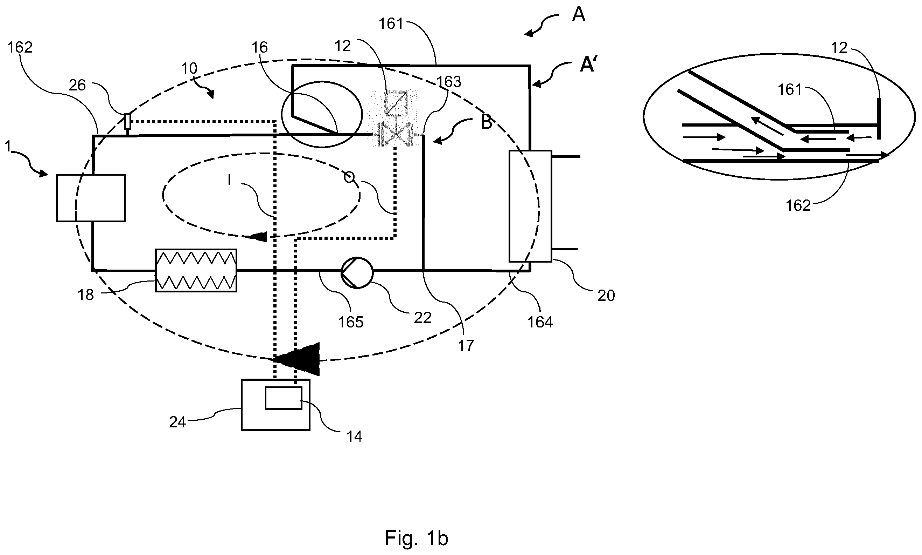

If the valve 12 is in an intermediate position (see Figure 1b) the coolant flows into the section A' of the cooling circuit A, i.e. flows through the high temperature cooler 20, as well as into the bypass B. In other words, a proportion of the coolant will flow through the HT-cooler 20 but not all of the coolant such that the effected cooling can be adjusted to the current needs by a simple two-way valve 12.

Preferably, the two-way valve 12 is a solenoid valve and/or pilot-operated and/or proportionally controlled by a pulse width modulated PWM signal. The implementation of a solenoid valve is advantageous because it requires much less space in comparison to motorized three-way valves. Further, the cooling system with a solenoid valve comprise less parts which also reduces the need for maintenance and costs because the moving parts are reduced to a minimum. Further, the implementation of a proportionally controlled solenoid valve by a pulse width modulated PWM signal is advantageous as the power consumption is low in comparison to a motorized three-way valve, which are typically operated with 230V power supply. Further, the valve can be controlled in precise manner, specifically in an essentially stepless manner.

The conduit may be pipes connected to the elements of the cooling system 10 such as the internal combustion engine 1, the two-way valve 12, the air charge cooler 18, the HT-cooler 20, the pump 22. Cooling systems of marine propulsion systems typically comprise pipes with diameters in the range of 80mm to 150mm. The implementation of pilot operated solenoid valves enables the coolant system to regulate high flow rates and high pressures in a very efficient manner, in particular with reduced power consumption and improved control.

According to the embodiment shown in Figure 1a to Figure 1c, a first conduit junction 16 is provided to distribute the coolant into the section A' of the cooling circuit A in case the two-way valve 12 is closed or in the intermediate position, wherein the conduit junction 16 is arranged upstream the valve 12.

The first conduit junction 16 is configured such that a first conduit 162 distributing the to be cooled coolant from the internal combustion engine 1 is connected with a second conduit 161 distributing the coolant to the HT-cooler 20.

As shown by the enlarged section circle of the first junction 16 in Figure 1a, the first conduit junction is configured such that a flow of the coolant from the first conduit 162 into the second conduit 161 changes the direction. In case the two-way valve 12 is closed or in intermediate position (see also the enlarged section circle of the first junction 16 in Figure1b), the coolant is diverted through the first conduit junction 16 after the coolant hits the closed two-way valve 12 (see Figure 1a) or half opened two-way valve 12 (see Figure 1b) respectively and reverses the flow direction of the coolant or a partial volume of the volume towards the first conduit junction 16. By this, a regulation of the coolant for an internal combustion engine is provided in a simplified manner with less moving parts, less maintenance and less costs.

The enlarged section circle of the first junction 16 in Figure 1c shows the case where the valve 12 is open. The coolant runs along the bypass B bypassing the section A' of the cooling circuit A. No coolant is deviated into the section A'. In contrast, any remaining coolant in the section A' is drawn into the bypass via the first conduit junction 16 because of the fluid mechanical properties of the coolant (venturi effect).

Specifically, the first conduit junction 162 is configured that a terminal end of the second conduit 161 is at least partially arranged within the first conduit 162, preferably coaxially, to distribute the coolant into the section A' of the cooling circuit A. By this, the deviation of the coolant into the section A' of the cooling circuit A can be done in a more efficient manner.

The first conduit 162 distributing the coolant to be cooled from the internal combustion engine 1 is connected to the two way valve 12, wherein the bypass is connected to the two-way valve 12 to bypass the HT-cooler 20 and to distribute the coolant via the bypass B in case the two-way valve 12 is open.

The first conduit junction 16 may be a Y-type junction. Alternatively, it may also be a T-junction (not shown).

The first conduit junction 16 has due to the fluid mechanical properties (venturi effect) a preferred flow direction towards the bypass. A Y-junction is advantageous as this effect is strengthened, i.e. the coolant flows nearly completely into the bypass B when the valve 12 is open. This is in particular relevant when the cooling system 10 and the engine 1 are in cold start mode, as remaining coolant may be still in the section A' of the cooling circuit. Further, a check valve is not necessary which reduces further the complexity of the cooling system leading to less parts to be maintained. The Y-shape is also advantageous when the valve 12 is closed, as the coolant flow in the direction of the HT-Cooler is smoother, i.e. the transition from the first conduit 162 to the second conduit 161 in case the coolant is guided to the section A' of the cooling circuit A to the cooler 20.

As shown in Figure 1a to Figure 1c an internal combustion engine 1 is connected to the cooling system 10. An Engine Control Module, ECM, 24 for controlling a two-way valve 12, in particular a pilot operated solenoid valve is provided. Preferably, the ECM 24 is directly mounted on the engine (not shown).

The Engine Control Module, ECM, 24 is configured to receive a measured temperature Tₘ of the coolant from a temperature sensor 26, an input signal I to the ECM 24 (see dotted line), and to generate a PWM-signal, an output signal O (see dotted line), in dependence of the measured temperature Tₘ and a predetermined temperature Tₚ of the coolant. The generated signal is transmitted to the solenoid valve.

Further, the ECM may comprise a PID-controller 14 that is configured to generate the PWM-signal.

The PID-controller 14 continuously calculates an error value as the difference between the predetermined temperature Tₚ, also called temperature setpoint, of the coolant and the measured coolant temperature Tₘ.

If Tₘ differs from Tₚ, the PID controller 14 applies a correction signal to the solenoid two-way valve 12. Specifically, the PID-controller 14 signals a PWM-signal, the output signal O, to the at least one solenoid two-way valve 12, preferably pilot operated, which in response regulates the coolant by distributing the coolant through the cooling circuit such that the temperature of the coolant is adjusted to the predetermined temperature Tₚ or setpoint. For example, if the predetermined temperature set point is 90°C and the measured temperature is much higher, e.g. 130°C, the cooling system 10 may be regulated by transmitting a signal O from the ECM 24 to the two-way solenoid valve 12 to close the valve (see Figure 1a) such that the coolant is guided to the high temperature cooler. If the predetermined temperature set point is 90°C and the measured temperature is close to the predetermined temperature set point, e.g. 95°C, the cooling system may be regulated by transmitting a signal O to the two-way solenoid valve 12 to open the valve such that the coolant is guided to the bypass to bypasses the high temperature cooler (see Figure 1c). The coolant is then cooled to 90°C by the air charge cooler 18. In another example, the solenoid two-way valve 12 may be signaled to be set in an intermediate position such that the coolant is guided to the HT-cooler 20 and the bypass (see Figure 1b).

The signal may by a pulse width modulated signaled from the ECM and the PID-controller 14 to the solenoid valve. The signal may be transmitted by a wire which is connected with the solenoid two-way valve by a plug and a corresponding socket (not shown) at the solenoid valve side. The socket may have 24V pins to receive the signal.

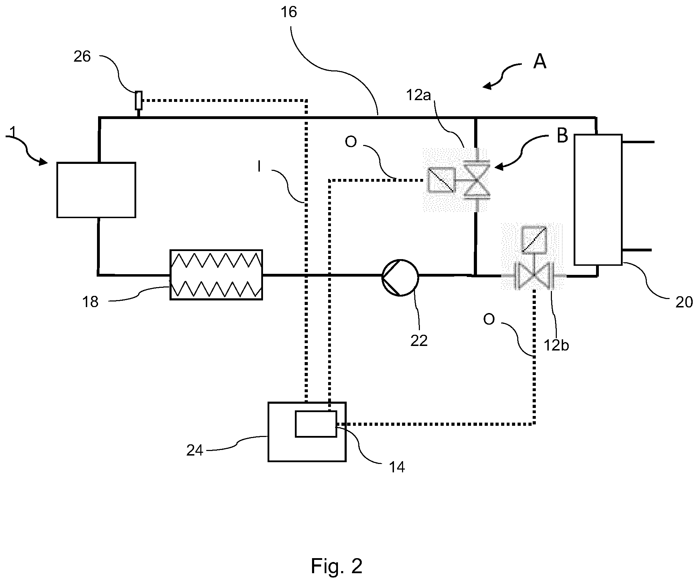

Figure 2 shows schematically a cooling system 10 according to a second embodiment for controlling a temperature of a coolant for an internal combustion engine 1 with two two-way valves 12a, 12b. A first two-way valve 12a is configured to regulate the coolant flow in the bypass B. A second two-way valve 12b is configured to regulate the coolant flow in the section A' of the cooling circuit. By this, a three-way valve, which is more complex in regards to maintenance and operation, is replaced by two two-way valves. Thus, the complexity of the cooling is reduced.

The difference to the first embodiment is that two two-way valves 12a, 12b are used to control the coolant through the HT-cooler 20 and/or through the bypass.

For example, if the first valve 12a is closed and the second valve 12b is open, the coolant flows through the cooler 20.

For example, if the first valve 12a is open and valve 12b is closed, the coolant flows through the bypass B.

For example, if the first valve 12a is open and valve 12b is open, the coolant flows through the bypass and the cooler.

Regardless of the opening states of the valves 12a, 12b, the coolant flows through the air charge cooler 18 back to the internal combustion engine 1, as described in the first embodiment. Here too, the coolant in the cooling circuit 10 is driven by a pump 22.

As described for the first embodiment, the ECM 24 is configured to transmit pulse width modulated signals, here one output signal O to each of the solenoid two-way valves 12a, 12b.

According to a first aspect, the cooling system for controlling a temperature of a coolant for an internal combustion engine, comprising a cooling circuit and a bypass fluidly connected to the cooling circuit and bypassing a section of the cooling circuit is provided. A valve is provided to regulate the coolant distribution via the cooling circuit and/or via the bypass.

The implementation of a, preferably only one, two-way valve in a cooling system for an internal combustion engine enables a regulation of cooling system in an improved and simplified manner, in particular by replacing a (motorized) three-way valve. The two-way valve comprises less parts reducing also the need for maintenance and costs.

Preferably, the two-way valve is a solenoid valve and/or pilot-operated and/or proportionally controlled by a pulse width modulated PWM signal.

A solenoid valve has two main parts: the solenoid and the valve. The solenoid converts electrical energy into mechanical energy which, in turn, opens or closes the valve mechanically. Thus, the solenoid valve enables an electrically controlled automation of the coolant flow regulation. The implementation of a solenoid valve is advantageous because it requires much less space in comparison to motorized three-way valves. Further, the cooling system with a solenoid valve comprise less parts which also reduces the need for maintenance and costs because the moving parts are reduced to a minimum.

A pilot-operated solenoid valve, in comparison to a direct acting solenoid valve, uses system coolant pressure as a pilot to actuate a valve spool. In contrast to direct acting solenoid valves, where the coil of the solenoid valve acts directly on the valve spool to actuate it. The pilot operated solenoid valve enables the use in cooling systems with pipes of large diameters. Cooling systems of marine propulsion systems comprises typically conduits or pipes with diameters in the range of 80mm to 150mm. The implementation of pilot operated solenoid valves enables the coolant system to regulate high flow rates and high pressures in a very efficient manner, in particular with reduced power consumption and improved control.

Pulse width modulation, PWM, enables a digital manipulation of the power supplied to the pilot operated solenoid valve. This is done by reducing the amount of power supplied during the portions of the operating cycle that do not require the full supply voltage. PWM modulates power by switching the power off and on according to a specified duty cycle at a high frequency. The duty cycle is the ratio of on and off time. This ratio of on and off time creates an average output voltage which becomes the input voltage for the pilot operated solenoid valve. The frequency this cycle is repeated is fast enough that the solenoid does not respond to the on/off switching and instead only responds to the average.

Proportionally controlled means that the pilot operated solenoid valve is not only suitable for being closed or opened but controllable essentially stepless, i.e. the valve opens or closes in the degree in dependence on the average power voltage modulated by the PWM signal.

Preferably, the solenoid valve comprises a 24V coil. For example, if the solenoid valve is controlled to be operated in a half-opened position, the pulse width modulation transmits a signal at average power supply voltage of 12V.

This is advantageous, as in case of a power supply blackout failure, large internal combustion engines usually have a 24V backup supply. Thus, the (pilot operated) solenoid valve can be operated in a fail-safe manner.

Further, the implementation of a proportionally controlled solenoid valve by a pulse width modulated PWM signal is advantageous as the power consumption is low in comparison to a motorized three-way valve, which are typically operated with 230V power supply. Further, the valve can be controlled in precise manner, specifically in an essentially stepless manner.

According to the invention, the valve is configured such that if the valve is in a closed position the coolant flows into the section of the cooling circuit, and if the valve is in an open position the coolant flows into the bypass, and if the valve is in an intermediate position the coolant flows into the section of the cooling circuit and the bypass, wherein the cooling circuit is configured to guide the coolant from the to be cooled internal combustion engine into a high-temperature HT-cooler and a device for absorbing heat from an internal combustion engine and/or the air charge cooler driven by a pump and the bypass bypasses the high-temperature HT-cooler.

The two-way valve, in particular a pilot operated two-way valve, is spring loaded and therefore closed initially. Such an arrangement is advantageous because in the event of a fault, e.g. the valve clogs, the coolant flows through the HT-cooler, i.e. the cooler is not bypassed by the bypass, preventing that the engine overheats.

According to the invention, a first conduit junction is provided to distribute the coolant into the section of the cooling circuit in case the valve is closed or in the intermediate position, wherein the conduit junction is arranged upstream the valve.

The first conduit junction is configured such that a first conduit distributing the to be cooled coolant from the internal combustion engine is connected with a second conduit distributing the coolant to the HT-cooler.

Further preferably, the first conduit junction is configured such that a flow of the coolant from the first conduit into the second conduit changes the direction.

In case the valve is open, the coolant runs along the bypass bypassing a section of the cooling circuit. No coolant is deviated into the section. In contrast, any remaining coolant in the section is drawn into the bypass via the first conduit junction because of the venturi effect. In order to prevent this return flow from the section of the coolant section, a check valve or non-return valve may be arranged in the section of the cooling circuit. In case the valve is closed or in intermediate position, the coolant is diverted through the conduit junction after the coolant hits the closed valve and reverses the flow direction of the coolant or a partial volume of the volume towards the junction. By this, a regulation of the coolant for an internal combustion engine is provided with less moving parts.

According to the invention, the first conduit junction is configured such that a terminal end of the second conduit is at least partially arranged within the first conduit, preferably coaxially, to distribute the coolant into the section of the cooling circuit. By this, the deviation of the coolant into the section of the cooling circuit can be done in a more efficient manner.

According to an embodiment, a first conduit distributing the coolant to be cooled from the internal combustion engine is connected to the two-way valve, wherein the bypass is connected to the two-way valve to bypass the HT-cooler and to distribute the coolant via the bypass in case the two-way valve is open.

According to an embodiment, the first conduit junction is a T-type, preferably a Y-type, junction.

As stated above the first junction has due to the fluid mechanical properties (Venturi effect) a preferred flow direction towards the bypass. A Y-junction is advantageous as this effect is strengthened, i.e. the coolant flows nearly completely into the bypass when the valve is open. This is in particular relevant when the cooling system and the engine is in cold start mode. Further, a check valve is not necessary which reduces further the complexity of the cooling system, i.e. less parts to be maintained. The Y-shape is also advantageous when the valve is closed, as the coolant flow in the direction of the HT-cooler is smoother.

In an example, the coolant is water or oil.

According to a second embodiment, the cooling system comprises a first two-way valve regulating the coolant flow in the bypass and a second two-way valve regulating the coolant flow in the section of the cooling circuit. By this, a three-way valve, which is more complex in regards to maintenance and operation, is replaced by two two-way valves. Thus, the complexity of the cooling is reduced.

According to a further aspect, a method for operating a cooling system comprising a cooling circuit and a bypass is provided. A two-way valve is provided to regulate the coolant distribution in the cooling circuit and/or the bypass, wherein in case the valve is closed the coolant flows into the section of the cooling circuit, wherein in case the valve is opened the coolant flows into the bypass, and in case the two-way valve is in an intermediate position the coolant flows into the section of the cooling circuit and the bypass.

In case the two-way valve is open or in intermediate position the coolant flows through the bypass from a to be cooled internal combustion engine through a first conduit, the two-way valve, a third conduit, a second conduit junction, a fifth conduit distributing coolant into the device for absorbing heat from an internal combustion engine and/or an air charge cooler and back through the to be cooled internal combustion engine driven by the pump. In case the two-way valve is closed or in intermediate position, the coolant flows into the section of the cooling circuit from the to be cooled internal combustion engine through the first conduit to the two-way valve where the coolant is diverted to be distributed through the conduit junction and the second conduit distributing the coolant into the HT cooler, further through a fourth conduit distributing the coolant from the HT-cooler, the second conduit junction, the fifth conduit distributing the coolant into the device for absorbing heat from an internal combustion engine and/or the air charge cooler and back through the to be cooled internal combustion engine driven by the pump. The two-way valve may be a solenoid valve and/or pilot- operated and/or proportionally controlled by a pulse width modulated PWM signal. A method with a, preferably only one, two-way valve in the cooling system for an internal combustion engine a regulation of cooling system is advantageous as it enables a simplified regulation of the coolant. The implementation of only one two-way valve reduces the parts reducing also the need for maintenance and costs.

According to a further aspect, an internal combustion engine is provided comprising the above described cooling system and an Engine Control Module, ECM for controlling the two-way valve, in particular the pilot operated solenoid valve.

According to an embodiment, the Engine Control Module, ECM, is configured to receive a measured temperature of the coolant from a temperature sensor, and to generate a PWM-signal in dependence of the measured temperature and a predetermined temperature of the coolant.

Preferably, the ECM comprises a PID-controller that is configured to generate the PWM-signal.

The PID-controller continuously calculates an error value as the difference between the predetermined temperature Tₚ, also called temperature setpoint, of the coolant and the measured coolant temperature Tₘ.

If Tₘ differs from Tₚ, the PID controller applies a correction signal to the solenoid valve. Specifically, the PID-controller signals a PWM-signal to the at least one solenoid valve, preferably pilot operated, which in response regulates the coolant by distributing the coolant through the cooling circuit such that the temperature of the coolant is adjusted to the predetermined temperature or setpoint. For example, if the predetermined temperature set point is 90°C and the measured temperature is much higher, e.g. 130°C, the cooling system may be regulated by transmitting a signal to the two-way solenoid valve to close the valve such that the coolant is guided to the high temperature cooler. If the predetermined temperature set point is 90°C and the measured temperature is close to the predetermined temperature set point, e.g. 95°C, the cooling system may be regulated by transmitting a signal to the two-way solenoid valve to open the valve such that the coolant is guided to the bypass to bypasses the HT- cooler. In another example, the valve may be signaled to be set in an intermediate position such that the coolant is guided to the HT-cooler and the bypass. The signal may by a pulse width modulated signaled from the ECM and the PID-controller to the solenoid valve. The signal may be transmitted by a wire which is connected with the solenoid valve by a plug and a corresponding socket at solenoid valve side. The socket may have 24V pins to receive the signal.

The ECM is preferably directly mounted on the engine.

According to an embodiment, the internal combustion engine is a ship engine or an engine of a power plant.

### Industrial Applicability

With reference to Figs. 1 to 2, a cooling system, an internal combustion engine with a cooling system and a method for controlling a temperature of a coolant for an internal combustion engine are suggested. The cooling system, the internal combustion engine with a cooling system and the method are applicable in and in connection with propulsion system, in particular marine propulsion systems. The suggested cooling system may replace conventional cooling systems for controlling a temperature of a coolant for an internal combustion engine or may serve as a replacement or retrofit part in marine propulsion systems. Accordingly, the suggested method may replace conventional cooling methods for controlling a temperature of a coolant for an internal combustion engine.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention, as defined by the appended claims.

## Claims

1. A cooling system (10) for controlling a temperature of a coolant for an internal combustion engine for a ship or a power plant,
comprising a cooling circuit (A) and a bypass (B) fluidly connected to the cooling circuit (A) and bypassing a section (A') of the cooling circuit (A), wherein the cooling circuit (A) is configured to guide the coolant from the internal combustion engine (1) into a high temperature HT-cooler (20) and a device for absorbing heat from an internal combustion engine and/or an air charge cooler (18) driven by a pump (22) and the bypass (B) bypasses the high-temperature HT-cooler (20), and
wherein a two-way valve (12) is provided to regulate the coolant distribution via the cooling circuit (A) and/or via the bypass (B), wherein the valve (12) is configured such that if the valve (12) is in a closed position the coolant flows into the section (A') of the cooling circuit (A), and if the valve (12) is in an open position the coolant flows into the bypass (B), and if the valve (12) is in an intermediate position the coolant flows into the section (A') of the cooling circuit (A) and the bypass (B),
wherein a first conduit junction (16) is provided to distribute the coolant into the section (A') of the cooling circuit (A) in case the valve (12) is closed or in the intermediate position, wherein the conduit junction (16) is arranged upstream the valve (12),
wherein the first conduit junction (16) is configured such that a first conduit (162) distributing the to be cooled coolant from the internal combustion engine is connected with a second conduit (161) distributing the coolant to the HT-cooler (20),
wherein the first conduit junction (16) is configured such that a terminal end of the second conduit (161) is at least partially arranged within the first conduit (162) to distribute the coolant into the section (A') of the cooling circuit (A).

2. The cooling system (10) according to claim 1, wherein the two-way valve (12) is a solenoid valve and/or pilot- operated and/or proportionally controlled by a pulse width modulated PWM signal.

3. The cooling system (10) according to claim 1, wherein the first conduit junction (16) is configured, such that a flow of the coolant from the first conduit (162) into the second conduit (161) changes the direction.

4. The cooling system (10) according to one of the preceding claims, wherein the first conduit junction (16) is configured such that a terminal end of the second conduit (161) is coaxially arranged within the first conduit (162).

5. The cooling system (10) according to one of the preceding claims, wherein the first conduit (162) is connected to the two way valve (12), wherein the bypass (B) is connected to the two-way valve (12) to bypass the HT-cooler and to distribute the coolant via the bypass (B) in case the two-way valve is open.

6. The cooling system (10) according to one of the preceding claims, wherein the first conduit junction (16) is a T-type junction.

7. The cooling system (10) according to one of the preceding claims 1-6, wherein the first junction (16) is a Y-type junction.

8. The cooling system (10) according to one of the preceding claims, wherein the cooling system (10) comprises the two-way valve (12) as a first two-way valve (12a) regulating the coolant flow in the bypass (B) and a further two-way valve as a second two-way valve (12b) regulating the coolant flow in the section (A') of the cooling circuit (A).

9. A method for operating a cooling system (10) according to one of the preceding claims, comprising a cooling circuit (A) and a bypass (B), and wherein the two-way valve (12) is provided to regulate the coolant distribution in the cooling circuit (A) and/or the bypass (B);
wherein the cooling circuit (A) further comprises an HT-cooler (20) and a device for absorbing heat from an internal combustion engine and/or an air charge cooler (18), and a pump (22) configured to drive the coolant in the cooling circuit (A),
wherein when the two-way valve (12) is closed the coolant flows into a section (A') of the cooling circuit (A), wherein in case the valve (12) is opened the coolant flows into the bypass (B), and in case the valve (12) is in an intermediate position the coolant flows into the section (A') of the cooling circuit (A) and the bypass (B);
wherein when the two-way valve (12) is opened or set in intermediate position the coolant flows through the bypass (B) from an internal combustion engine through a first conduit (162), the two-way valve (12), a third conduit (163), a second conduit junction (17), a fifth conduit (165) distributing coolant into the device for absorbing heat from an internal combustion engine and/or an air charge cooler (18) and back through the internal combustion engine driven by the pump (22);
wherein when the two-way valve is closed or in intermediate position the coolant flows into the section (A') of the cooling circuit (A) from the internal combustion engine through the first conduit (162) to the two-way valve (12) where the coolant is diverted to be distributed through the conduit junction (16) and the second conduit (161) distributing the coolant into the HT-cooler, further through a fourth conduit (164) distributing the coolant from the HT-cooler, the second conduit junction (17), the fifth conduit (165) distributing the coolant into the device for absorbing heat from an internal combustion engine and/or the air charge cooler and back through the internal combustion engine driven by the pump (22);
wherein the two-way valve (12) is a solenoid valve and/or pilot-operated and/or proportionally controlled by a pulse width modulated PWM signal.

10. An internal combustion engine (1), comprising a cooling system (10) according to claims 1 to 8, and an Engine Control Module, ECM (24) for controlling a two-way valve (12).

11. The internal combustion engine (1) according to claim 10, wherein the two-way valve (12) is a pilot operated solenoid valve.

12. The internal combustion engine (1) according to claim 10 or 11, wherein the Engine Control Module, ECM, (24) is configured to receive a measured temperature (Tₘ, I) of the coolant from a temperature sensor (26), and to generate a PWM-signal (O) in dependence of the measured temperature (Tₘ) and a predetermined temperature (Tₚ) of the coolant.

13. The internal combustion engine according to claim 10, 11 or 12, wherein the ECM (24) comprises a PID-controller (14) that is configured to generate the PWM-signal.

14. The internal combustion engine according to one of the preceding claims, wherein the internal combustion engine is a ship engine or an engine of a power plant.

## Patentansprüche

1. Kühlsystem (10) zum Steuern einer Temperatur eines Kühlmittels für einen Verbrennungsmotor für ein Schiff oder ein Kraftwerk,
umfassend einen Kühlkreislauf (A) und eine Umgehungsleitung (B), die mit dem Kühlkreislauf (A) fluidisch verbunden ist und einen Abschnitt (A') des Kühlkreislaufs (A) umgeht, wobei der Kühlkreislauf (A) konfiguriert ist, um das Kühlmittel von dem Verbrennungsmotor (1) in einen Hochtemperaturkühler (HT-Kühler) (20) und eine Vorrichtung zum Absorbieren von Wärme von einem Verbrennungsmotor und/oder einem Luftfüllungskühler (18) zu führen, der durch eine Pumpe (22) angetrieben wird, und die Umgehungsleitung (B) den Hochtemperaturkühler (HT-Kühler) (20) umgeht, und
wobei ein Zweiwegeventil (12) bereitgestellt ist, um die Kühlmittelverteilung über den Kühlkreislauf (A) und/oder über die Umgehungsleitung (B) zu regeln, wobei das Ventil (12) derart konfiguriert ist, dass falls das Ventil (12) in einer geschlossenen Position ist, das Kühlmittel in den Abschnitt (A') des Kühlkreislaufs (A) strömt, und falls das Ventil (12) in einer geöffneten Position ist, das Kühlmittel in die Umgehungsleitung (B) strömt, und falls das Ventil (12) in einer Zwischenposition ist, das Kühlmittel in den Abschnitt (A') des Kühlkreislaufs (A) und die Umgehungsleitung (B) strömt,
wobei eine erste Kanalverzweigung (16) bereitgestellt ist, um das Kühlmittel in den Abschnitt (A') des Kühlkreislaufs (A) zu verteilen, sofern das Ventil (12) geschlossen ist oder in der Zwischenposition ist, wobei die Kanalverzweigung (16) stromaufwärts des Ventils (12) angeordnet ist,
wobei die erste Kanalverzweigung (16) derart konfiguriert ist, dass ein erster Kanal (162), der das zu kühlende Kühlmittel von dem Verbrennungsmotor verteilt, mit einem zweiten Kanal (161) verbunden ist, der das Kühlmittel an den HT-Kühler (20) verteilt,
wobei die erste Kanalverzweigung (16) derart konfiguriert ist, dass ein Abschlussende des zweiten Kanals (161) mindestens teilweise innerhalb der ersten Leitung (162) angeordnet ist, um das Kühlmittel in den Abschnitt (A') des Kühlkreislaufs (A) zu verteilen.

2. Kühlsystem (10) nach Anspruch 1, wobei das Zweiwegeventil (12) ein Magnetventil ist und/oder vorgesteuert und/oder durch ein pulsweitenmoduliertes Signal (PWM-Signal) proportional gesteuert wird.

3. Kühlsystem (10) nach Anspruch 1, wobei die erste Kanalverzweigung (16) derart konfiguriert ist, dass eine Strömung des Kühlmittels von der ersten Leitung (162) in die zweite Leitung (161) die Richtung ändert.

4. Kühlsystem (10) nach einem der vorstehenden Ansprüche, wobei die erste Kanalverzweigung (16) derart konfiguriert ist, dass ein Abschlussende der zweiten Leitung (161) innerhalb der ersten Leitung (162) koaxial angeordnet ist.

5. Kühlsystem (10) nach einem der vorstehenden Ansprüche, wobei der erste Kanal (162) mit dem Zweiwegeventil (12) verbunden ist, wobei die Umgehungsleitung (B) mit dem Zweiwegeventil (12) verbunden ist, um den HT-Kühler zu umgehen und um das Kühlmittel über die Umgehungsleitung (B) zu verteilen, sofern das Zweiwegeventil geöffnet ist.

6. Kühlsystem (10) nach einem der vorstehenden Ansprüche, wobei die erste Kanalverzweigung (16) eine T-Verzweigung ist.

7. Kühlsystem (10) nach einem der vorstehenden Ansprüche 1 bis 6, wobei die erste Verzweigung (16) eine Y-Verzweigung ist.

8. Kühlsystem (10) nach einem der vorstehenden Ansprüche, wobei das Kühlsystem (10) das Zweiwegeventil (12) als ein erstes Zweiwegeventil (12a) zum Regeln des Kühlmittelflusses in der Umgehungsleitung (B) und ein weiteres Zweiwegeventil als ein zweites Zweiwegeventil (12b) zum Regeln des Kühlmittelflusses in dem Abschnitt (A') des Kühlkreislaufs (A) umfasst.

9. Verfahren zum Betreiben eines Kühlsystems (10) nach einem der vorstehenden Ansprüche, umfassend einen Kühlkreislauf (A) und eine Umgehungsleitung (B), und wobei das Zweiwegeventil (12) bereitgestellt ist, um die Kühlmittelverteilung in dem Kühlkreislauf (A) und/oder in der Umgehungsleitung (B) zu regeln;
wobei der Kühlkreislauf (A) ferner einen HT-Kühler (20) und eine Vorrichtung zum Absorbieren von Wärme von einem Verbrennungsmotor und/oder einem Luftfüllungskühler (18) und eine Pumpe (22) umfasst, die konfiguriert ist, um das Kühlmittel im Kühlkreislauf (A) anzutreiben,
wobei, wenn das Zweiwegeventil (12) geschlossen ist, das Kühlmittel in einen Abschnitt (A') des Kühlkreislaufs (A) strömt, wobei, sofern das Ventil (12) geöffnet ist, das Kühlmittel in die Umgehungsleitung (B) strömt, und sofern das Ventil (12) in einer Zwischenposition ist, das Kühlmittel in den Abschnitt (A') des Kühlkreislaufs (A) und der Umgehungsleitung (B) strömt;
wobei, wenn das Zweiwegeventil (12) geöffnet oder in eine Zwischenposition gebracht ist, das Kühlmittel durch die Umgehungsleitung (B) von einem Verbrennungsmotor durch einen ersten Kanal (162), das Zweiwegeventil (12), einen dritten Kanal (163), eine zweite Kanalverzweigung (17), einen fünften Kanal (165), der Kühlmittel in die Vorrichtung zum Absorbieren von Wärme von einem Verbrennungsmotor und/oder einem Luftfüllungskühler (18) verteilt, und zurück durch den Verbrennungsmotor fließt, der durch die Pumpe (22) angetrieben wird;
wobei, wenn das Zweiwegeventil geschlossen oder in einer Zwischenposition ist, das Kühlmittel in den Abschnitt (A') des Kühlkreislaufs (A) von dem Verbrennungsmotor durch den ersten Kanal (162) zu dem Zweiwegeventil (12), wo es umgeleitet wird, um durch die Kanalverzweigung (16) und den zweiten Kanal (161) verteilt zu werden, der das Kühlmittel in den HT-Kühler leitet, weiter durch einen vierten Kanal (164), der das Kühlmittel von dem HT-Kühler verteilt, die zweite Kanalverzweigung (17), den fünften Kanal (165), der das Kühlmittel in die Vorrichtung zum Absorbieren von Wärme von dem Verbrennungsmotor und/oder den Luftfüllungskühler verteilt, und zurück durch den Verbrennungsmotor fließt, der durch die Pumpe (22) angetrieben wird;
wobei das Zweiwegeventil (12) ein Magnetventil ist und/oder vorgesteuert und/oder durch ein pulsweitenmoduliertes Signal (PWM-Signal) proportional gesteuert wird.

10. Verbrennungsmotor (1), umfassend ein Kühlsystem (10) nach den Ansprüchen 1 bis 8 und ein Motorsteuermodul (ECM) (24) zum Steuern eines Zweiwegeventils (12).

11. Verbrennungsmotor (1) nach Anspruch 10, wobei das Zweiwegeventil (12) ein vorgesteuertes Magnetventil ist.

12. Verbrennungsmotor (1) nach Anspruch 10 oder 11, wobei das Motorsteuermodul (ECM) (24) konfiguriert ist, um eine gemessene Temperatur (Tₘ, I) des Kühlmittels von einem Temperatursensor (26) zu empfangen und um ein PWM-Signal (O) in Abhängigkeit von der gemessenen Temperatur (Tₘ) und einer zuvor bestimmten Temperatur (Tₚ) des Kühlmittels zu erzeugen.

13. Verbrennungsmotor nach Anspruch 10, 11 oder 12, wobei das ECM (24) eine PID-Steuerung (14) umfasst, die konfiguriert ist, um das PWM-Signal zu erzeugen.

14. Verbrennungsmotor nach einem der vorstehenden Ansprüche, wobei der Verbrennungsmotor ein Schiffsmotor oder ein Motor eines Kraftwerks ist.

## Revendications

1. Système de refroidissement (10) permettant de contrôler une température d'un liquide de refroidissement pour un moteur à combustion interne pour un navire ou une centrale électrique,
comprenant un circuit de refroidissement (A) et une voie de contournement (B) raccordée fluidiquement au circuit de refroidissement (A) et contournant une section (A') du circuit de refroidissement (A), dans lequel le circuit de refroidissement (A) est conçu pour guider le liquide de refroidissement depuis le moteur à combustion interne (1) dans un refroidisseur **HT** à haute température (20) et un dispositif d'absorption de chaleur d'un moteur à combustion interne et/ou un refroidisseur de charge d'air (18) entraîné par une pompe (22) et la voie de contournement (B) contourne le refroidisseur HT à haute température (20), et
dans lequel une vanne à deux voies (12) est prévue pour réguler la distribution de liquide de refroidissement par le biais du circuit de refroidissement (A) et/ou par le biais de la voie de contournement (B), dans lequel la vanne (12) est conçue de telle sorte que si la vanne (12) est dans une position fermée le liquide de refroidissement s'écoule dans la section (A') du circuit de refroidissement (A), et si la vanne (12) est dans une position ouverte, le liquide de refroidissement s'écoule dans la voie de contournement (B), et si la vanne (12) est dans une position intermédiaire le liquide de refroidissement s'écoule dans la section (A') du circuit de refroidissement (A) et dans la voie de contournement (B),
dans lequel une première jonction de conduit (16) est prévue pour distribuer le liquide de refroidissement dans la section (A') du circuit de refroidissement (A) dans le cas où la vanne (12) est fermée ou dans la position intermédiaire, dans lequel la jonction de conduit (16) est agencée en amont de la vanne (12),
dans lequel la première jonction de conduit (16) est conçue de telle sorte qu'un premier conduit (162) distribuant le liquide de refroidissement à refroidir depuis le moteur à combustion interne est raccordé à un second conduit (161) distribuant le liquide de refroidissement au refroidisseur HT (20),
dans lequel la première jonction de conduit (16) est conçue de telle sorte qu'une extrémité terminale du second conduit (161) est au moins partiellement agencée au sein du premier conduit (162) pour distribuer le liquide de refroidissement dans la section (A') du circuit de refroidissement (A).

2. Système de refroidissement (10) selon la revendication 1, dans lequel la vanne à deux voies (12) est une vanne solénoïde et/ou à commande pilote et/ou contrôlée proportionnellement par un signal PWM à modulation de largeur d'impulsion.

3. Système de refroidissement (10) selon la revendication 1, dans lequel la première jonction de conduit (16) est conçue, de telle sorte qu'un écoulement du liquide de refroidissement depuis le premier conduit (162) dans le second conduit (161) change de direction.

4. Système de refroidissement (10) selon l'une des revendications précédentes, dans lequel la première jonction de conduit (16) est conçue de telle sorte qu'une extrémité terminale du second conduit (161) est agencée coaxialement au sein du premier conduit (162).

5. Système de refroidissement (10) selon l'une des revendications précédentes, dans lequel le premier conduit (162) est raccordé à la vanne à deux voies (12), dans lequel la voie de contournement (B) est raccordée à la vanne à deux voies (12) pour contourner le refroidisseur HT et distribuer le liquide de refroidissement par le biais de la voie de contournement (B) dans le cas où la vanne à deux voies est ouverte.

6. Système de refroidissement (10) selon l'une des revendications précédentes, dans lequel la première jonction de conduit (16) est une jonction de type T.

7. Système de refroidissement (10) selon l'une des revendications précédentes 1 à 6, dans lequel la première jonction (16) est une jonction de type Y.

8. Système de refroidissement (10) selon l'une des revendications précédentes, dans lequel le système de refroidissement (10) comprend la vanne à deux voies (12) en guise de première vanne à deux voies (12a) régulant l'écoulement de liquide de refroidissement dans la voie de contournement (B) et une vanne à deux voies supplémentaire en guise de seconde vanne à deux voies (12b) régulant l'écoulement de liquide de refroidissement dans la section (A') du circuit de refroidissement (A).

9. Procédé de fonctionnement d'un système de refroidissement (10) selon l'une des revendications précédentes, comprenant un circuit de refroidissement (A) et une voie de contournement (B), et dans lequel la vanne à deux voies (12) est prévue pour réguler la distribution du liquide de refroidissement dans le circuit de refroidissement (A) et/ou la voie de contournement (B) ;
dans lequel le circuit de refroidissement (A) comprend en outre un refroidisseur HT (20) et un dispositif d'absorption de chaleur d'un moteur à combustion interne et/ou un refroidisseur de charge d'air (18), et une pompe (22) conçue pour entraîner le liquide de refroidissement dans le circuit de refroidissement (A),
dans lequel, lorsque la vanne à deux voies (12) est fermée le liquide de refroidissement s'écoule dans une section (A') du circuit de refroidissement (A), dans lequel dans le cas où la vanne (12) est ouverte le liquide de refroidissement s'écoule dans la voie de contournement (B), et dans le cas où la vanne (12) est dans une position intermédiaire le liquide de refroidissement s'écoule dans la section (A') du circuit de refroidissement (A) et dans la voie de contournement (B) ;
dans lequel lorsque la vanne à deux voies (12) est ouverte ou placée en position intermédiaire le liquide de refroidissement s'écoule à travers la voie de contournement (B) depuis un moteur à combustion interne à travers un premier conduit (162), la vanne à deux voies (12), un troisième conduit (163), une seconde jonction de conduit (17), un cinquième conduit (165) distribuant du liquide de refroidissement dans le dispositif d'absorption de chaleur d'un moteur à combustion interne et/ou un refroidisseur de charge d'air (18) et de retour à travers le moteur à combustion interne entraîné par la pompe (22) ;
dans lequel, lorsque la vanne à deux voies est fermée ou en position intermédiaire le liquide de refroidissement s'écoule dans la section (A') du circuit de refroidissement (A) depuis le moteur à combustion interne à travers le premier conduit (162) jusqu'à la vanne à deux voies (12) où le liquide de refroidissement est dévié pour être distribué à travers la jonction de conduit (16) et le deuxième conduit (161) distribuant le liquide de refroidissement dans le refroidisseur HT, en outre à travers un quatrième conduit (164) distribuant le liquide de refroidissement du refroidisseur HT, la seconde jonction de conduit (17), le cinquième conduit (165) distribuant le liquide de refroidissement dans le dispositif d'absorption de chaleur d'un moteur à combustion interne et/ou le refroidisseur de charge d'air et de retour à travers le moteur à combustion interne entraîné par la pompe (22) ;
dans lequel la vanne à deux voies (12) est une vanne solénoïde et/ou à commande pilote et/ou contrôlée proportionnellement par un signal PWM à modulation de largeur d'impulsion.

10. Moteur à combustion interne (1), comprenant un système de refroidissement (10) selon les revendications 1 à 8, et un module de contrôle de moteur, ECM (24) permettant de contrôler une vanne à deux voies (12).

11. Moteur à combustion interne (1) selon la revendication 10, dans lequel la vanne à deux voies (12) est une vanne solénoïde à commande pilote.

12. Moteur à combustion interne (1) selon la revendication 10 ou 11, dans lequel le module de contrôle de moteur (ECM) (24) est conçu pour recevoir une température mesurée (Tₘ, I) du liquide de refroidissement depuis un capteur de température (26), et pour générer un signal PWM (O) en fonction de la température mesurée (Tₘ) et d'une température prédéterminée (Tₚ) du liquide de refroidissement.

13. Moteur à combustion interne selon la revendication 10, 11 ou 12, dans lequel l'ECM (24) comprend un dispositif de contrôle PID (14) qui est conçu pour générer le signal PWM.

14. Moteur à combustion interne selon l'une des revendications précédentes, dans lequel le moteur à combustion interne est un moteur de bateau ou un moteur d'une centrale électrique.
